# EUROPEAN PATENT APPLICATION

(11) **EP 0 691 371 A1**
(43) Date of publication of application: **10.01.1996**
(21) Application number: 94201963.9
(22) Date of filing: 07.07.1994
(51) Int. Cl.: C08K 5/10, C08L 27/12

(54) **Fluoroelastomer compositions**

(71) Applicant: DU PONT DE NEMOURS INTERNATIONAL S.A., CH-1218 Le Grand-Saconnex (Genève) (CH)
(72) Inventor: Bowers, Stephen, CH-1197 Prangins (VAUD) (CH); Paglia, Patrick, CH-1205 Genève (CH)

(57) **Abstract**

The present invention is directed to curable compositions of fluoroelastomers containing processing aids, to the use of these processing aids to improve moulding and extrusion processes of fluoroelastomeric compositions and to articles obtainable by crosslinking and curing these compositions.

## Description

### Field of the Invention

The present invention is directed to curable compositions of fluoroelastomers containing processing aids, to the use of these processing aids to improve moulding and extrusion processes of fluoroelastomeric compositions and to articles obtainable by crosslinking and curing these compositions.

### Background of the Invention

Fluoroelastomeric compositions can be moulded and extruded into articles having excellent resistance to aggressive chemicals and high temperatures They have the disadvantage, however, that compared with more conventional elastomer compounds, such as nitrile butadiene rubber (NBR), fluoroelastomeric compositions demonstrate relatively poor processability in terms of ease of mixing, ease of moulding / demoulding, as well as mould sticking and fouling. In addition, moulding cycle times when using fluoroelastomeric compositions are generally longer and hence productivity is lower.

To provide better processability, processing aids are usually added to fluoroelastomeric compositions. Commonly used processing aids migrate to the surface during processing and it is generally believed that the processing advantage is provided at the interface between the fluoroelastomeric composition and the mould surface. Whilst these processing aids provide processing advantages in the short term, they eventually result in a deposit at the mould surface which is usually termed mould fouling and eventually causes processing difficulties. The surface deposit promotes adhesion between moulded components and the mould surface and impairs demoulding. It also results in surface defects on moulded components. The only remedy is to clean the mould surface at regular intervals which gives a loss of productivity. These processing aids can also interfere with bonding performance, in the case of components having metal bonded inserts, and interfere with the physical properties of moulded components.

Examples of such processing aids are the currently available VITON Process Aids (Numbers 1, 2 and 3) (available from the DuPont Company), which are solids at room temperature. Viton Process Aid No 1 is a mixture of hydrocarbon waxes and an aromatic sulfur compound. VITON Process Aid No 2 is a natural vegetable wax. VITON Process Aid No 3 is an aliphatic sulfur compound on an inert binder.

Sorbitan monolaurate, a fatty acid ester having a molecular weight far above the range contemplated by the present invention, has been used as a processing aid for fluoroelastomeric compositions (c.f. Japanese Kokoku No 52-3,425 (1977)). It is described as providing processing advantages in terms of flow and the ability to more easily fill complex cavities. However, it is described as being used at processing temperatures from 130-180 °C, which is very low for fluoroelastomer processing.

It is an object of the present invention to provide a curable elastomeric composition having various advantages to prior art compounds, including,
- improved compound mixing due to improved mill release (In the case of mill mixing) or rotor release (In the case of internal mixing);
- improved processing by moulding (injection or compression) defined by an easier flow in the mould, a better mould release (less tendency to stick in the mould), a lower level of mould fouling and hence a reduced frequency of mould cleaning, shorter cycle times and hence improved productivity, easier demoulding due to a higher elongation at break at processing temperatures and before post curing
- improvement in the physical properties of cured and post-cured material defined as higher elongation at break, enhanced compression set resistance; and
- useful modification of the curing characteristics to provide a desired response (fast or slow).

### Detailed Description of the Invention.

The above-mentioned and other advantages are demonstrated by the present composition comprising a fluoroelastomer and a processing aid, characterized in that the processing aid is a liquid at standard temperature and pressure, contains at least one ester group, has a boiling point ranging from 50 to 500 °C and a molecular weight ranging from 100 to 500.

As used herein, certain terms are understand to have the meanings indicated below.

"Fluoroelastomer", sometimes referred to as "FKM", means a high molecular weight elastomeric material that is comprised of repeating units derived from copolymerization of two or more kinds of fluorine-containing monomers selected from vinylidene fluoride (VF₂), tetrafluoroethylene (TFE), hexafluoropropene (HFP), pentafluoropropene, chlorotrifluoroethylene, perfluoro(methyl vinyl ether), perfluoro(ethyl vinyl ether), perfluoro(propyl vinyl ether), perfluoro(propoxypropyl vinyl ether) and higher homologues.

In addition to the repeat units of the above monomers, repeating units of 1) olefins or fluorovinyl ethers that contain functional groups such as chlorine, bromine, iodine, nitrile, ester, sulfonyl fluoride, or perfluorophenyl, 2) hydrocarbon olefins such as ethylene, propylene, butene-1, and 2-methyl propene, or 3) alkyl vinyl ethers that contain no fluorine such as methyl vinyl ether, 2-chloroethyl vinyl ether, or 4-hydroxybutyl vinyl ether, may also be present in the fluoroelastomer.

Suitable fluoroelastomers according to the invention are commercially available from the DuPont Company under the names VITON (an elastomer containing the repeating units VF₂, HFP and TFE, which is an "FKM" type elastomer); and KALREZ and ZALAK (elastomers containing repeating units of perfluorinated alkyl vinyl ethers, also commonly known as "FFKM" type elastomers).

The processing aids which are the topic of this invention are of a low molecular weight and are highly compatible with fluoroelastomers.

The processing aids according to the present invention are liquids at standard temperature and pressure, contain at least one ester group, have boiling points ranging from 50 C to 500 °C, (preferably in the range 250 to 350 °C) and molecular weights in the range 50 to 500, preferably 100 to 400 °C.

Suitable processing aids according to the invention are of the general formula: 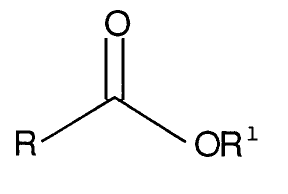
wherein R and R¹ are, independently, carbon chains of 1 to 20 carbon atoms, said chains optionally containing one or more heteroatoms selected from the group consisting of oxygen, nitrogen and sulfur, and said chains optionally being substituted by one or more groups selected from the group consisting of C₁ to C₂₀ alkyl, alkenyl, alcohol and alkoxy, C₂ to C₅ ester, nitrile, halogen and an amide of the formula -CONR²R³, wherein R² and R³ are, independently, hydrogen or the substituents defined for R and R¹ but excluding amide.

Any carbon chain or group defined for R¹ - R⁴ that contains three or more carbon atoms may be linear or branched.

Preferably R¹ is C₁ to C₆ alkyl and R is a chain of 1 to 6 carbon atoms, optionally substituted by one to three groups selected from the group consisting of C₂ to C₅ ester and alcohol.

Particularly preferred processing aids according to the invention are di-basic ester, di-ethyl-hydroxy-glutarate, di-ethyl-L-tartrate, tri-ethyl citrate and triacetin.

The processing aid according to the invention preferably comprises 0.1 to 10 weight % of the composition, more preferably 0.1 to 3 weight %.

Processing aids according to the invention may be to used either alone or in conjunction with other, known processing aids for fluoroelastomer compositions. Various suitable additional processing aids include VITON Process Aids 1, 2 and 3, previously mentioned. Particularly advantageous improvements in processing have been achieved when using the processing aids of the invention in conjunction with 0.1 to 10 weight % of VITON Process Aid 1.

In addition to the processing aids of the present invention and additional processing aids, the compositions of the present invention may contain conventional fillers, plasticizers, metal oxides and curing systems, which are known in the art.

Compositions according to the invention may be rendered heat curable by incorporating the following components:
1) a bisphenol or other polyol crosslinking agent such as Bisphenol AF (4,4'-hexafluoroisopropylidenediphenol), Bisphenol A (4,4-isopropylidenediphenol), hydroquinone, or 4-benzoylresorcinol,
2) an accelerator such as a quaternary ammonium or quaternary phosphonium compound, e.g. benzyltriphenylphosphonium chloride or another benzyltriphenylphosphonium salt or an allyltriphenylphosphonium or allyltributylphosphonium salt tetra-n-butylammonium hydrogen sulfate or another tetra-n-butylammonium salt.
3) an organic or inorganic acid acceptor; and
4) a carbon black or mineral filler.

In such heat curing systems the crosslinking agent and accelerator are preferably present in the form of a quaternary ammonium or phosphonium salt of the diol or polyol or as a mixture of such a salt and the diol or polyol.

Compositions according to the invention can be rendered radiation curable by the incorporation of the following components
1) a peroxide such as a dialkyl peroxide or dialkyl-bis-peroxide such as 2,5-dimethyl-2,5-di(t-butylperoxy)hexane or 2,5-dimethyl-2,5-di(t-butylperoxy)hexyne-3;
2) a radical trap such as a diallyl or polyallyl compound or a divinyl or polyvinyl compound or triallyl isocyanurate, trimethallyl isocyanurate, or triallylcyanurate;
3) an organic or inorganic acid acceptor such as magnesium oxide, calcium hydroxide, zinc oxide, lead oxide, or an organic compound such as an amine or epoxide; and
4) a carbon black or mineral filler.

The compositions according to the present invention can be readily crosslinked and cured under ordinary conditions as commonly known for fluoroelastomers.

Characteristics of some practical compounds are hereafter given.

### Examples of Some Practical Compounds

One hundred parts by weight of VITON B600 elastomer was compounded with other ingredients to give the compounds in Table 1. below.

**Table 1**

| Compositions | | | | | |
|---|---|---|---|---|---|
| INGREDIENT | COMP 1 | COMP 2 | COMP 3 | COMP 4 | COMP 5 |
| POLYMER | 100 | 100 | 100 | 100 | 100 |
| MT BLACK | 10 | 10 | 10 | 10 | 10 |
| NYAD 400 | 25 | 25 | 25 | 25 | 25 |
| RHENOFIT CF | 3 | 3 | 3 | 3 | 3 |
| MAGLITE D | 6 | 6 | 6 | 6 | 6 |
| VC.50 | 2.3 | 2.3 | 2.3 | 2.3 | 2.3 |
| TBABR | 0.1 | 0.1 | 0.1 | 0.1 | 0.1 |
| VPA NO.1 | 0.5 | 0.5 | 0.5 | 0.5 | 0.5 |
| DBE-IB | 1 | - | - | - | - |
| TEC | - | 1 | - | - | - |
| DET | - | - | 1 | - | - |
| DHG | - | - | - | 1 | - |
| SPAN 20 | - | - | - | - | 1 |
| - POLYMER is defined above. - MT BLACK is defined as THERMAX MT N990 carbon black filler. - NYAD 400 is a calcium meta-silicate white filler. - RHENOFIT CF is a calcium hydroxide. - MAGLITE D is a high activity magnesium oxide. - TBABR is tetrabutyl ammonium bromide, a bonding promoter - VC.50 is Viton Curative Number 50. - VPA NO 1. is Viton Process Aid Number 1. - DBE-IB is defined as a di-basic ester. - DET is di-ethyl-L-tartrate. - DHG is di-ethyl-hydroxy-glutarate. - TEC is tri-ethyl-citrate. - SPAN 20 is sorbitan monolaurate. | | | | | |

Compounds 1 and 2 illustrate that excellent elongation at break before and after post curing and excellent compression set resistance can be obtained using certain of the processing aids of the present invention.

Compound 3 illustrates that the curing characteristics can be made safer using certain of the processing aids of the present invention.

Compounds 1, 2 and 4 illustrate that very significant improvements in cycle time can be obtained using certain of the processing aids of the present invention.

Compound 5 illustrates the disadvantage of using the prior art, higher molecular weight processing aid of the sorbitan monolaurate type.

The curing properties of these compounds are given below in Table 2 (ODR, 3 Deg arc, 180 C). Compound 3 shows that the scorch safety is increased and that the cure rate can be significantly reduced to provide more processing safety by using di-ethyl-L-tartrate as a processing aid.

**Table 2**

| Curing characteristics of experimental compounds. | | | | | |
|---|---|---|---|---|---|
| TEST | COMPOUND NUMBER | | | | |
| | COMP 1 | COMP 2 | COMP 3 | COMP 4 | COMP 5 |
| ML (dNm) | 17.4 | 18.16 | 16.1 | 17.6 | 6.8 |
| MH (dNm) | 109.7 | 111.67 | 114.5 | 111.9 | 131.2 |
| Delta (dNm) | 92.3 | 93.51 | 98.4 | 94.3 | 114.4 |
| TS₂ (min) | 1.47 | 1.42 | 1.78 | 1.50 | 1.68 |
| T₅₀ (min) | 2.46 | 2.44 | 3.37 | 2.49 | 2.91 |
| T₉₀ (min) | 2.72 | 2.74 | 3.94 | 2.73 | 3.16 |
| MH is the maximum torque reached during the ODR test. ML is the minimum torque found during the ODR test. Delta is defined as MH minus ML. TS₂ is defined as the two point rise time. T₅₀ is defined as the time to reach a torque level of 50% of delta. T₉₀ is defined as the time to reach a torque level of 50% of delta. | | | | | |

The physical properties of the experimental compounds before post curing, are given in Table 3. Compounds 1, 2, 3 and 4 (containing processing aids of the present invention) all show high elongation at break in the unpostcured state which will greatly improve demoulding characteristics. Compound 5 of the prior art shows lower elongation at break before post curing.

**Table 3**

| Physical properties of experimental compounds (Not Post-cured). | | | | | |
|---|---|---|---|---|---|
| TEST | COMP 1 | COMP 2 | COMP 3 | COMP 4 | COMP 5 |
| TS (MPa) | 10.8 | 9.9 | 10.3 | 9.4 | 10.0 |
| EB (%) | 359 | 325 | 337 | 318 | 289 |
| M50 (MPa) | 2.3 | 2.3 | 2.4 | 2.3 | 2.6 |
| M100 (MPa) | 3.7 | 3.6 | 3.7 | 3.7 | 4.0 |
| M200 (MPa) | 6.3 | 6.1 | 6.0 | 6.1 | 6.7 |
| M300 (MPa) | 8.9 | 9.0 | 8.6 | 8.9 | - |
| Shore A | 72 | 72 | 72 | 72 | 75 |

The physical properties of the experimental compounds after post curing, are given in Table 4. Compounds 1, 2, 3 and 4 (containing the new processing aids of the present invention) all show excellent retention of elongation at break in the postcured state. This is important for ease of assembly of moulded components by the end user. Compounds 1 and 2 show excellent compression set resistance. Compound 5 of the prior art shows a severe reduction in elongation at break after post curing and inferior compression set resistance.

**Table 4**

| Physical properties of experimental compounds (After Post-cure 24 hrs @ 200 C). | | | | | |
|---|---|---|---|---|---|
| TEST | COMP 1 | COMP 2 | COMP 3 | COMP 4 | COMP 5 |
| TS (MPa) | 13.4 | 12.8 | 12.2 | 11.9 | 13.6 |
| EB (%) | 278 | 278 | 230 | 270 | 193 |
| M50 (MPa) | 3.0 | 2.8 | 3.0 | 2.7 | 4.0 |
| M100 (MPa) | 6.1 | 5.4 | 6.4 | 5.2 | 8.5 |
| M200 (MPa) | 10.5 | 9.6 | 11.0 | 9.1 | - |
| M300 (MPa) | - | - | - | - | - |
| Shore A | 74 | 74 | 74 | 73 | 76 |
| CS (70hrs @ 200 C) | 24.7 | 25.3 | 29.2 | 32.1 | 36.0 |

The phenomenon of mould fouling is known to be more pronounced when moulding under certain conditions, for example when using hot moulds or when demoulding at low states of cure to obtain short cycle times. It is also well known that mould fouling is often more severe when moulding in the presence of bonding agents, particularly in the case where some discontinuity in the moulding cycle results in a short shot. Mould fouling appears to be induced rapidly after a short shot due to some interaction between the bonding agent, air in the unfilled cavity and the uncured fluoroelastomer compound at the flow front.

In order to assess the advantages of the various processing aids during moulding two test procedures have been developed. The first of these test procedures is aimed at assessing the tendency of fluoroelastomer compounds to stick in a mould over a range of moulding temperatures. The test mould (Injection) consists of six disk shaped cavities of diameter 30.0 mm and depth 2.0 mm into which metal inserts of thickness 1.0 mm and treated with a bonding agent can be placed. Introduction of the metal inserts reduces the effective cavity thickness to 1.0 mm.

The test procedure is as follows:
a. Set the mould temperature to a certain value (e.g. 200 °C).
b. Set the cure time to be well above the 90% cure time for the compound at the particular moulding temperature.
c. Mould several cycles in the normal way and then induce a short shot.
d. After the short shot, continue to mould a full shot and note whether the disks stick during demoulding.
e. If the disks do not stick, decrement the cure time and repeat steps a. to d.
f. Repeat steps a. to e. until the disks begin to stick in the mould (Note the cure time and mould temperature).
g. Set the mould temperature to a new value (e.g. 190 °C) and repeat steps b. to f.
h. Repeat steps b. to g. until a sensible low temperature limit has been reached (e.g. 180 °C for fluoroelastomers).

The best processing compounds are those that can be demoulded at the shortest possible cure times, at any particular moulding temperature, whilst still avoiding mould sticking.

At a mould temperature of 200 °C compounds 1 to 4 (containing processing aids according to the present invention) could all be demoulded successfully at cure times in the region of 25 s. At this temperature, compound 5 of the prior art gave immediate mould sticking and could not be processed.

At a mould temperature of 190 °C compounds 1 to 4 (containing processing aids according to the present invention) could all be demoulded successfully at cure times in the region of 35 to 40 s. At this temperature, compound 5 of the prior art gave mould sticking at cure times of 45 s.

At a mould temperature of 180 C compounds 1, 2 and 4 (containing processing aids according to the present invention) could all be demoulded successfully at cure times in the region of 60 to 65 s. At this temperature, compound 5 of the prior art gave mould sticking at cure times of 75 s. Compound 3 also gave mould sticking at cure times of 75 s at this mould temperature but this was to be expected since the di-ethyl tartrate used as a processing aid was intended to enhance scorch safety and reduce cure rate. A cure time of 75 s at 180 °C for compound 3 (containing di-ethyl tartrate) represents a very low state of cure (approximately 15%).

In addition to the test mould and the procedure described above, the experimental fluoroelastomer compounds were tested using a mould for automotive shaft seals that contain a metal insert. This was used to assess the processability in terms of the shortest possible cure time in a commercially representative moulding operation.

The data generated in this part of the assessment is given in Table 5 for a mould temperature of 190 °C ;

**Table 5**

| Minimum Possible Cure Time to Obtain a Cured Article Containing a Metal Insert and Having Good Bonding to the Metal Insert | |
|---|---|
| COMPOUND NUMBER | MINIMUM CURE TIME (s) |
| COMP 1 | 40 |
| COMP 2 | 35 |
| COMP 3 | 60 |
| COMP 4 | 35 |
| COMP 5 | 55 |

The data in Table 5 shows that when compounds 1, 2 and 4 (containing processing aids according to the present invention) could all be processed with very short cure times whilst still obtaining good components. Compound 5 of the prior art requires a long cure time to achieve good components.

Compound 3 required a much longer cure time to obtain good components at a mould temperature of 190 °C, however, this compound was designed to be slow as explained above.

In terms of cure time when moulding shaft seals, compositions according to the present invention are shown to allow up to 35% shorter cure times at a moulding temperature of 190 °C. In addition compositions according to the present invention would permit processing at even higher temperatures, providing further benefits in cycle time reduction.

## Claims

1. A curable composition comprising a fluoroelastomer and a processing aid, characterized in that the processing aid is a liquid at standard temperature and pressure, contains at least one ester group, has a boiling point ranging from 50 to 500 °C and a molecular weight ranging from 50 to 500.

2. A composition according to claim 1 wherein the processing aid is of the general formula 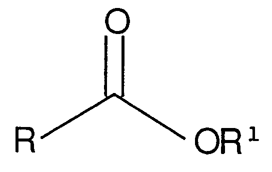 wherein R and R¹ are, independently, carbon chains of 1 to 20 carbon atoms, said chains optionally containing one or more heteroatoms selected from the group consisting of oxygen, nitrogen and sulfur, and said chains optionally being substituted by one or more groups selected from the group consisting of C₁ to C₂₀ alkyl, alkenyl, alcohol and alkoxy, C₂ to C₅ ester, nitrile, halogen and an amide of the formula -CONR²R³, wherein R² and R³ are, independently, hydrogen or the substituents defined for R and R¹ but excluding amide.

3. A composition according to claim 1 or 2 wherein R¹ is C₁ to C₆ alkyl and R is a chain of 1 to 6 carbon atoms, optionally substituted by one to three groups selected from the group consisting of C₂ to C₅ ester and alcohol.

4. A composition according to any one of claims 1 to 3 wherein the processing aid is selected from the group consisting of di-basic ester. di-ethyl-hydroxy-glutarate, di-ethyl-L-tartrate, tri-ethyl citrate and triacetin.

5. A composition according to any one of claims 1 to 4 wherein the fluoroelastomer is comprised of repeating units derived from copolymerization of two or more kinds of fluorine-containing monomers selected from vinylidene fluoride (VF₂), tetrafluoroethylene (TFE), hexafluoropropene (HFP), pentafluoropropene, chlorotrifluoroethylene, perfluoro(methyl vinyl ether), perfluoro(ethyl vinyl ether), perfluoro(propyl vinyl ether), perfluoro(propoxypropyl vinyl ether) and higher homologues.

6. A composition according to any one of claims 1 to 5 wherein the processing aid comprises 0.1 to 10 weight % of the composition.

7. A composition according to any one of claims 1 to 6 further comprising an additional processing aid.

8. Use of a processing aid defined in any one of claims 1 to 4 in a process for moulding or extruding a fluoroelastomer compound.

9. A composition according to Claims 1-7 which is rendered heat curable by the incorporation of 1) a bisphenol or other polyol crosslinking agent, 2) an accelerator, 3) an organic or inorganic acid acceptor, and 4) a carbon black or mineral filler; or rendered radiation curable by the incorporation of 1) a peroxide, 2) a radical trap, 3) an organic or inorganic acid acceptor, and 4) a carbon black or mineral filler.

10. An article obtainable by crosslinking or curing a composition according to claim 9.
